(19) Europäisches Patentamt
European Patent Office
Office européen des brevets

(11) **EP 4 691 994 A1**

(12) **EUROPEAN PATENT APPLICATION**
published in accordance with Art. 153(4) EPC

(43) Date of publication:
**11.02.2026 Bulletin 2026/07**

(21) Application number: **24780743.1**

(22) Date of filing: **28.03.2024**

(51) International Patent Classification (IPC):
*C01G 49/00* (2006.01)    *G03G 9/107* (2006.01)
*G03G 9/113* (2006.01)

(52) Cooperative Patent Classification (CPC):
**C01G 49/00; G03G 9/107; G03G 9/113**

(86) International application number:
**PCT/JP2024/012889**

(87) International publication number:
**WO 2024/204645 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 JP 2023052502**

(71) Applicant: **Powdertech Co., Ltd.**
**Kashiwa-shi, Chiba 277-8557 (JP)**

(72) Inventors:
• **ISHIKAWA, Makoto**
**Kashiwa-shi, Chiba 277-8557 (JP)**
• **UEMURA, Tetsuya**
**Kashiwa-shi, Chiba 277-8557 (JP)**

(74) Representative: **Vossius & Partner**
**Patentanwälte Rechtsanwälte mbB**
**Siebertstrasse 3**
**81675 München (DE)**

(54) **FERRITE PARTICLES, CARRIER CORE MATERIAL FOR ELECTROPHOTOGRAPHIC DEVELOPER, CARRIER FOR ELECTROPHOTOGRAPHIC DEVELOPER, AND ELECTROPHOTOGRAPHIC DEVELOPER**

(57)    The present invention provides ferrite particles satisfying $1.10 \leq Y/X$, where X (atom%) is a ratio of Sr or Ca on a surface of a particle having a particle diameter of 35 µm or less and Y (atom%) is a ratio of Sr or Ca on a surface of a particle having a particle diameter of 40 µm or more, and a carrier core material for an electrophotographic developer containing the ferrite particles.

EP 4 691 994 A1

**Description**

TECHNICAL FIELD

The present invention relates to ferrite particles, a carrier core material for an electrophotographic developer, a carrier for an electrophotographic developer, and an electrophotographic developer.

BACKGROUND ART

An electrophotographic developing method is a method of developing an image by adhering toner particles in a developer to an electrostatic latent image formed on a photoreceptor, and the developer used in this method is divided into a two-component developer composed of toner particles and carrier particles and a one-component developer containing only toner particles. A magnetic brush method using a magnet roll is mainly used as a developing method using a two-component developer composed of toner particles and carrier particles among such developers.

In the two-component developer, the carrier particles are a carrier substance for imparting a desired charge to the toner particles by being stirred together with the toner particles in a developing box filled with the developer, and further conveying the charged toner particles to a surface of the photoreceptor to form a toner image on the photoreceptor. The carrier particles remaining on the developing roll holding the magnet are returned from the developing roll into the developing box again, mixed and stirred with new toner particles, and used repeatedly for a certain period of time.

In the two-component developer, unlike the one-component developer, the carrier particles have a function of being mixed and stirred with the toner particles, charging the toner particles, and further conveying the charged toner particles, and controllability in designing the developer is good. Therefore, the two-component developer is suitable for a full-color developing device that requires a high image quality, a device for performing high-speed printing that requires reliability and durability of image maintenance, and the like.

In this manner, the carrier particles must always triboelectrically charge the toner particles to a desired polarity and a sufficient charge amount during the long-term use. However, in the case where a charge amount distribution of the toner is wide, toner scattering derived from a low-charge toner and an image density failure derived from a high-charge toner are likely to occur. That is, the carrier particles are required to be capable of controlling not only a charge imparting ability to the toner but also the charge amount distribution to be narrower.

Patent Literature 1 proposes ferrite particles having an excellent rising property of a toner charge amount and high charge stability by locally providing large convex portions on surfaces of the ferrite particles serving as carrier particles. Specifically, Patent Literature 1 discloses ferrite particles containing, as a main component, a material represented by a composition formula $MxFe_{3-X}O_4$ (where M is at least one metal selected from the group consisting of Mg, Mn, Ca, Ti, Cu, Zn, and Ni, and $0 < X < 1$), in which the ferrite particles have a maximum height Rz of larger than 2.2 $\mu$m and an average length RSm of larger than 19 $\mu$m and smaller than 26 $\mu$m.

Patent Literature 2 proposes a carrier having a sharp charge amount distribution by providing appropriate unevenness on a resin coating layer of the carrier coated with a resin. Specifically, Patent Literature 2 discloses a carrier for developing an electrostatic charge image, the carrier including a coating film composed of at least a binder resin and fine particles, in which a particle diameter (D) of the particles and a film thickness (h) of the binder resin satisfy $1 < [D/h] < 10$, and a magnetization of the carrier at 1 kOe is in a range of 40 emu/g to 80 emu/g.

PRIOR ART DOCUMENTS

PATENT LITERATURES

Patent Literature 1: JP2015-151287A
Patent Literature 2: JP2004-198663A

SUMMARY OF INVENTION

PROBLEM TO BE SOLVED BY THE INVENTION

However, in the techniques described in Patent Literatures 1 and 2, the charge amount distribution in consideration of a particle size distribution of the carrier is not necessarily sufficiently studied, and the charge amount distribution cannot be said to be sufficiently sharp. In particular, in the carrier provided with the resin coating layer on the surface thereof, a carrier core material may be exposed due to abrasion and peeling off of the resin coating layer due to long-term use in a developing tank, and the influence of a charge imparting ability and a charge amount distribution of the carrier core material is large, so that charge control of the toner is difficult, and an image density failure and toner scattering are likely to occur.

Accordingly, an object of the present invention is to provide a carrier core material for an electrophotographic developer, which has a high charge imparting ability and a sharp charge amount distribution, which is thus less likely to cause an image density failure and toner scattering, and from which a good image quality can be obtained even when used as a developer for a long period of time, a carrier for an electrophotographic developer obtained by coating a surface of the carrier core material for an electrophotographic developer with a resin, and ferrite particles to be an electrophotographic developer using the carrier for an electrophotographic developer.

MEANS FOR SOLVING PROBLEM

As a result of intensive studies to solve the problems as described above, the present inventors have found that when a ratio of Sr or Ca on a surface of a particle having a relatively small particle diameter and a ratio of Sr or Ca on a surface of a particle having a relatively large particle diameter satisfy a predetermined condition, it is possible to obtain ferrite particles from which a carrier core material for an electrophotographic developer having a desired charge imparting ability and a sharp charge amount distribution can be obtained.

Thus, the present invention provides ferrite particles, which satisfy the following formula:

$$1.10 \le Y/X,$$

where X (atom%) is a ratio of Sr or Ca on a surface of a particle having a particle diameter of 35 $\mu$m or less and Y (atom%) is a ratio of Sr or Ca on a surface of a particle having a particle diameter of 40 $\mu$m or more.

The ferrite particles according to the present invention preferably satisfy the following formulas:

$$0.30 \le X \le 0.80,$$

$$0.36 \le Y \le 1.55,$$

and

$$1.20 \le Y/X \le 2.00.$$

The ferrite particles according to the present invention preferably have a cumulative 50% particle diameter D50 of 30 $\mu$m or more and 50 $\mu$m or less in a volume-based particle size distribution, and a ratio $P_{+40}$ of a particle having a particle diameter of 40 $\mu$m or more of 5 number% or more and 40 number% or less in a number-based particle size distribution.

The ferrite particles according to the present invention preferably have a surface roughness Rz of 2.5 $\mu$m or more and 4.5 $\mu$m or less, and a standard deviation Rz$\sigma$ of the surface roughness Rz of 0.2 $\mu$m or more and 1.0 $\mu$m or less.

The ferrite particles according to the present invention preferably contain 0.3 wt% or more and 1.2 wt% or less of Sr or Ca, and more preferably contains 15 wt% or more and 30 wt% or less of Mn and 45 wt% or more and 65 wt% or less of Fe.

The ferrite particles according to the present invention preferably have a residual magnetization $\sigma$r of less than 3.0 Am$^2$/kg.

In addition, the present invention provides a carrier core material for an electrophotographic developer containing the above ferrite particles.

Further, the present invention provides a carrier for an electrophotographic developer containing the above ferrite particles and a resin coating layer provided on a surface of the ferrite particles.

Further, the present invention provides an electrophotographic developer containing the above carrier for an electrophotographic developer and a toner. The electrophotographic developer according to the present invention is preferably for use as a replenishment developer.

EFFECTS OF INVENTION

According to the present invention, it is possible to provide a carrier core material for an electrophotographic developer, which has a high charge imparting ability and a sharp charge amount distribution, which is thus less likely to cause an image density failure and toner scattering, and from which a good image quality can be obtained even when used as a developer for a long period of time, a carrier for an electrophotographic developer obtained by coating a surface of the carrier core material for an electrophotographic developer with a resin, and ferrite particles to be an electrophotographic developer using the carrier for an electrophotographic developer.

EMBODIMENTS FOR CARRYING OUT THE INVENTION

In the present invention, a combination of two or more preferred embodiments is a more preferred embodiment.

Hereinafter, an embodiment of ferrite particles, a carrier core material for an electrophotographic developer, a carrier for an electrophotographic developer, and an electrophotographic developer according to the present invention will be described. Note that, in the present description, the ferrite particles, the carrier core material for an electrophotographic developer, the carrier for an electrophotographic developer, and the electrophotographic developer each mean an aggregate of individual particles, that is, a powder, unless otherwise specified.

1. Ferrite Particles and Carrier Core Material for Electrophotographic Developer

The ferrite particles according to the present invention satisfy the following formula:

$$1.10 \leq Y/X,$$

where X (atom%) is a ratio of Sr or Ca on a surface of a particle having a particle diameter of 35 $\mu$m or less and Y (atom%) is a ratio of Sr or Ca on a surface of a particle having a particle diameter of 40 $\mu$m or more.

First, an embodiment of the ferrite particles according to the present invention will be described. Hereinafter, the ferrite particles according to the present invention are described as being used mainly as a carrier core material for an electrophotographic developer. However, the ferrite particles according to the present invention can be used in various applications such as a magnetic ink, a magnetic fluid, various functional fillers such as a magnetic filler, a filler for a bonded magnet, and a filler for an electromagnetic wave shielding material, and an electronic component material, and the application of the ferrite particles is not limited to the carrier core material for an electrophotographic developer.

(1) Components

The ferrite particles according to the present invention are represented by $MO \cdot Fe_2O_3$ (M: divalent metal element), and generally contains Fe as a metal component as a main component, and preferably contains one or two components selected from Mn and Mg. These metal components serving as main components are present as a solid solution in a spinel structure. The ferrite particles according to the present invention preferably contain at least Fe and Mn as metal components serving as main components, and preferably contain Fe, Mn, and Mg as metal components serving as main components.

In the ferrite particles according to the present invention, a content of Fe is preferably 45 wt% or more and 65 wt% or less. When the content of Fe is within this range, a magnetization and a resistance are likely to be adjusted to desired levels. The content of Fe is more preferably 47 wt% or more, and still more preferably 48 wt% or more. In addition, the content of Fe is more preferably 60 wt% or less, and still more preferably 55 wt% or less.

In a preferred embodiment, in the ferrite particles, the content of Fe is preferably 45 wt% or more and 60 wt% or less, and more preferably 45 wt% or more and 55 wt% or less.

In a preferred embodiment, in the ferrite particles, the content of Fe is preferably 47 wt% or more and 65 wt% or less, more preferably 47 wt% or more and 60 wt% or less, and still more preferably 47 wt% or more and 55 wt% or less.

In a preferred embodiment, in the ferrite particles, the content of Fe is preferably 48 wt% or more and 65 wt% or less, more preferably 48 wt% or more and 60 wt% or less, and still more preferably 48 wt% or more and 55 wt% or less.

In the ferrite particles according to the present invention, a content of Mn is preferably 15 wt% or more and 30 wt% or less. When the content of Mn is within this range, the magnetization and the resistance are likely to be adjusted to desired levels. The content of Mn is more preferably 16 wt% or more, and still more preferably 17 wt% or more. In addition, the content of Mn is more preferably 25 wt% or less, and still more preferably 22 wt% or less.

In a preferred embodiment, in the ferrite particles, the content of Mn is preferably 15 wt% or more and 25 wt% or less, and more preferably 15 wt% or more and 22 wt% or less.

In a preferred embodiment, in the ferrite particles, the content of Mn is preferably 16 wt% or more and 30 wt% or less, more preferably 16 wt% or more and 25 wt% or less, and still more preferably 16 wt% or more and 22 wt% or less.

In a preferred embodiment, in the ferrite particles, the content of Mn is preferably 17 wt% or more and 30 wt% or less, more preferably 17 wt% or more and 25 wt% or less, and still more preferably 17 wt% or more and 22 wt% or less.

The ferrite particles according to the present invention preferably contain 15 wt% or more and 30 wt% or less of Mn and 45 wt% or more and 65 wt% or less of Fe.

In the ferrite particles according to the present invention, a content of Mg is preferably 0.5 wt% or more and 10 wt% or less. When the content of Mg is within this range, the magnetization and the resistance are likely to be adjusted to desired levels. The content of Mg is more preferably 1.0 wt% or more, and still more preferably 1.5 wt% or more. In addition, the content of Mg is more preferably 5.0 wt% or less, and still more preferably 3.0 wt% or less.

In a preferred embodiment, in the ferrite particles, the content of Mg is preferably 0.5 wt% or more and 5.0 wt% or less, and more preferably 0.5 wt% or more and 3.0 wt% or less.

In a preferred embodiment, in the ferrite particles, the content of Mg is preferably 1.0 wt% or more and 10 wt% or less, more preferably 1.0 wt% or more and 5.0 wt% or less, and still more preferably 1.0 wt% or more and 3.0 wt% or less.

In a preferred embodiment, in the ferrite particles, the content of Mg is preferably 1.5 wt% or more and 10 wt% or less, more preferably 1.5 wt% or more and 5.0 wt% or less, and still more preferably 1.5 wt% or more and 3.0 wt% or less.

It is important that the ferrite particles according to the present invention contain Sr or Ca as a trace component. A content of Sr or Ca in the ferrite particles according to the present invention is preferably 0.3 wt% or more and 1.2 wt% or less. When the content of Sr or Ca is 0.3 wt% or more, a charge imparting ability of a carrier for an electrophotographic developer to a toner is improved. When the content of Sr or Ca is 1.2 wt% or less, the ferrite particles are less likely to be influenced by the environment such as a high temperature and a high humidity, and environmental dependence of a charge amount is improved. The content of Sr or Ca is more preferably 0.4 wt% or more, and still more preferably 0.5 wt% or more. In addition, the content of Sr or Ca is more preferably 0.9 wt% or less, and still more preferably 0.8 wt% or less. Note that, the ferrite particles according to the present invention may contain either Sr or Ca, or may contain both Sr and Ca. In the case where both Sr and Ca are contained, the above content is a total content of Sr and Ca.

In a preferred embodiment, the content of Sr or Ca in the ferrite particles is preferably 0.3 wt% or more and 0.9 wt% or less, and more preferably 0.3 wt% or more and 0.8 wt% or less.

In a preferred embodiment, the content of Sr or Ca in the ferrite particles is preferably 0.4 wt% or more and 1.2 wt% or less, more preferably 0.4 wt% or more and 0.9 wt% or less, and still more preferably 0.4 wt% or more and 0.8 wt% or less.

In a preferred embodiment, the content of Sr or Ca in the ferrite particles is preferably 0.5 wt% or more and 1.2 wt% or less, more preferably 0.5 wt% or more and 0.9 wt% or less, and still more preferably 0.5 wt% or more and 0.8 wt% or less.

(2) Ratio of Sr or Ca According to Particle Diameter

Here, since the charge imparting ability to the toner is achieved by triboelectric charging between the carrier for an electrophotographic developer and the toner, a particle diameter and a specific surface area of the carrier for an electrophotographic developer (ferrite particles) have a large influence. In general, since there is a strong correlation between the particle diameter and the specific surface area of the particle, and the specific surface area decreases as the particle diameter increases, the carrier for an electrophotographic developer having a large particle diameter has a relatively weaker charge imparting ability than the carrier for an electrophotographic developer having a small particle diameter. That is, it is thought that a distribution of the particle diameter causes a variation in ability of the carrier for an electrophotographic developer to impart a charge amount to the toner, and a charge amount distribution of the toner is widened.

On the other hand, when the distribution of the particle diameter of the carrier for an electrophotographic developer is made too sharp, an amount of the toner entering voids between particles is relatively increased, so that a contact frequency with the toner is reduced, and therefore, there is a possibility that the charge amount is reduced or the charge amount distribution is widened, and there is a possibility that a production yield is greatly reduced.

Therefore, in the present invention, when Sr or Ca, which is known to improve the charge imparting ability to the toner, is added to the ferrite particles, a gradient of a composition (in particular, the ratio of Sr or Ca) is provided according to the particle diameters of the ferrite particles, and thereby the variation in charge imparting ability due to the particle diameter is reduced and the charge amount distribution is sharpened. Thus, it is important to set the ratio of Sr or Ca on the surface of the particle having a relatively large particle diameter to be lager than the ratio of Sr or Ca on the surface of the particle having a relatively small particle diameter.

More specifically, in the present invention, it is important to satisfy the following formula:

$$1.10 \leq Y/X,$$

where X (atom%) is the ratio of Sr or Ca on the surface of the particle having a particle diameter of 35 $\mu$m or less and Y (atom%) is the ratio of Sr or Ca on the surface of a particle having a particle diameter of 40 $\mu$m or more. When Y/X is less than 1.10, the variation in charge imparting ability to the toner is increased and the charge amount distribution is widened, so that toner scattering and an insufficient image density are likely to occur. Y/X is preferably 1.20 or more, and more preferably 1.25 or more. However, Y/X is preferably 2.50 or less, more preferably 2.00 or less, and still more preferably 1.75 or less since when Y/X is too large, it is likely to cause the variation in charge imparting ability to the toner.

In a preferred embodiment, it is preferable to satisfy $1.10 \leq Y/X \leq 2.50$, more preferable to satisfy $1.10 \leq Y/X \leq 2.00$, and still more preferable to satisfy $1.10 \leq Y/X \leq 1.75$.

In a preferred embodiment, it is preferable to satisfy $1.20 \leq Y/X \leq 2.50$, more preferable to satisfy $1.20 \leq Y/X \leq 2.00$, and still more preferable to satisfy $1.20 \leq Y/X \leq 1.75$.

In a preferred embodiment, it is preferable to satisfy $1.25 \leq Y/X \leq 2.50$, more preferable to satisfy $1.25 \leq Y/X \leq 2.00$, and still more preferable to satisfy $1.25 \leq Y/X \leq 1.75$.

The ratio X (atomic%) of Sr or Ca on the surface of the particle having a particle diameter of 35 $\mu$m or less preferably satisfies the following formula: $0.30 \leq X \leq 0.80$. When X is 0.30 or more, a sufficient charge imparting ability can be obtained. In addition, when X is 0.80 or less, the ferrite particles are less likely to be influenced by the environment such as a high temperature and a high humidity, and the environmental dependence of the charge amount is improved. X is more preferably 0.35 or more, and still more preferably 0.40 or more. In addition, X is more preferably 0.70 or less, and still more preferably 0.65 or less.

In a preferred embodiment, it is preferable to satisfy $0.30 \leq X \leq 0.70$, and more preferable to satisfy $0.30 \leq X \leq 0.65$.

In a preferred embodiment, it is preferable to satisfy $0.35 \leq X \leq 0.80$, more preferable to satisfy $0.35 \leq X \leq 0.70$, and still more preferable to satisfy $0.35 \leq X \leq 0.65$.

In a preferred embodiment, it is preferable to satisfy $0.40 \leq X \leq 0.80$, more preferable to satisfy $0.40 \leq X \leq 0.70$, and still more preferable to satisfy $0.40 \leq X \leq 0.65$.

X represents the ratio of Sr or Ca in elemental mapping of the surface of the particle having a particle diameter of 35 $\mu$m or less.

The ratio Y (atomic%) of Sr or Ca on the surface of the particle having a particle diameter of 40 $\mu$m or more preferably satisfies the following formula: $0.36 \leq Y \leq 1.55$. When Y is 0.36 or more, a sufficient charge imparting ability can be obtained. In addition, when Y is 1.55 or less, the ferrite particles are less likely to be influenced by the environment such as a high temperature and a high humidity, and the environmental dependence of the charge amount is improved. Y is more preferably 0.45 or more, and still more preferably 0.60 or more. In addition, Y is more preferably 1.15 or less, and still more preferably 0.95 or less.

In a preferred embodiment, it is preferable to satisfy $0.36 \leq Y \leq 1.15$, and more preferable to satisfy $0.36 \leq Y \leq 0.95$.

In a preferred embodiment, it is preferable to satisfy $0.45 \leq Y \leq 1.55$, more preferable to satisfy $0.45 \leq Y \leq 1.15$, and still more preferable to satisfy $0.45 \leq Y \leq 0.95$.

In a preferred embodiment, it is preferable to satisfy $0.60 \leq Y \leq 1.55$, more preferable to satisfy $0.60 \leq Y \leq 1.15$, and still more preferable to satisfy $0.60 \leq Y \leq 0.95$.

Y represents the ratio of Sr or Ca in elemental mapping of the surface of the particle having a particle diameter of 40 $\mu$m or more.

The ferrite particles according to the present invention more preferably satisfy the following formulas:

$$0.30 \leq X \leq 0.80,$$

$$0.36 \leq Y \leq 1.55,$$

and

$$1.20 \leq Y/X \leq 2.00.$$

Note that, the ratio of Sr or Ca in the elemental mapping of the surface of the particle can be measured by energy dispersive X-ray analysis (EDX analysis). In the EDX analysis, the content of the element at a depth of about several $\mu$m of the ferrite particle can be measured. A specific measurement method will be described in Examples to be described later.

(3) Particle Size Distribution

The ferrite particles according to the present invention preferably have a volume cumulative 50% particle diameter D50 of 30 $\mu$m or more and 50 $\mu$m or less in a volume-based particle size distribution. When D50 is 30 $\mu$m or more, adhesion of the carrier for an electrophotographic developer is less likely to occur. In addition, when D50 is 50 $\mu$m or less, the ferrite particles have an appropriate particle diameter with respect to the toner, so that the charge imparting ability is improved. D50 is more preferably 33 $\mu$m or more. In addition, D50 is more preferably 45 $\mu$m or less, and still more preferably 42 $\mu$m or less.

In a preferred embodiment, D50 is more preferably 30 $\mu$m or more and 45 $\mu$m or less, and still more preferably 30 $\mu$m or more and 42 $\mu$m or less.

In a preferred embodiment, D50 is more preferably 33 $\mu$m or more and 50 $\mu$m or less, still more preferably 33 $\mu$m

or more and 45 $\mu$m or less, and even more preferably 33 $\mu$m or more and 42 $\mu$m or less.

The ferrite particles according to the present invention have a ratio $D_{+62}$ of a particle having a particle diameter of 62 $\mu$m or more of preferably 12 vol% or less, and more preferably 10 vol% or less in the volume-based particle size distribution. When $D_{+62}$ is 12 vol% or less, a sharp distribution with few large particles is obtained, and thus a toner conveying ability is improved and an image quality is improved. In addition, the ferrite particles according to the present invention have a ratio $D_{-22}$ of a particle having a particle diameter of 22 $\mu$m or less of preferably 3 vol% or less, and more preferably 1.5 vol% or less in the volume-based particle size distribution. When $D_{-22}$ is 3 vol% or less, a sharp distribution with few small particles is obtained, and thus the carrier adhesion is less likely to occur.

In addition, the ferrite particles according to the present invention preferably have a ratio $P_{+40}$ of a particle having a particle diameter of 40 $\mu$m or more of 5 number% or more and 40 number% or less in a number-based particle size distribution. When $P_{+40}$ is within this range, voids between particles are appropriately embedded without reducing a yield, and thus a charge imparting property to the toner can be easily adjusted to a desired value. $P_{+40}$ is more preferably 8 number% or more. In addition, $P_{+40}$ is more preferably 20 number% or less.

In a preferred embodiment, $P_{+40}$ is more preferably 5 number% or more and 20 number% or less.

In a preferred embodiment, $P_{+40}$ is more preferably 8 number% or more and 40 number% or less, and still more preferably 8 number% or more and 20 number% or less.

The ferrite particles according to the present invention more preferably have a cumulative 50% particle diameter D50 of 30 $\mu$m or more and 50 $\mu$m or less in the volume-based particle size distribution, and a ratio $P_{+40}$ of a particle having a particle diameter of 40 $\mu$m or more of 5 number% or more and 40 number% or less in the number-based particle size distribution.

(4) Surface Properties

In the ferrite particles according to the present invention, a surface roughness Rz is preferably 2.5 $\mu$m or more and 4.5 $\mu$m or less. When Rz is 2.5 $\mu$m or more, the charge imparting ability tends to be improved due to appropriately present unevenness. When Rz is 4.5 $\mu$m or less, a decrease in fluidity due to excessive unevenness is prevented, and the contact frequency with the toner is increased, so that the charge imparting ability to the toner is improved. Rz is more preferably 2.8 $\mu$m or more. In addition, Rz is more preferably 4.0 $\mu$m or less.

In a preferred embodiment, Rz is more preferably 2.5 $\mu$m or more and 4.0 $\mu$m or less.

In a preferred embodiment, Rz is more preferably 2.8 $\mu$m or more and 4.5 $\mu$m or less, and still more preferably 2.8 $\mu$m or more and 4.0 $\mu$m or less.

In addition, in the ferrite particles according to the present invention, a standard deviation $Rz\sigma$ of the surface roughness Rz is preferably 0.2 $\mu$m or more and 1.0 $\mu$m or less. When $Rz\sigma$ is 0.2 $\mu$m or more, production using a method including sintering by a solid phase reaction is facilitated. When $Rz\sigma$ is 1.0 $\mu$m or less, exposure of a core material due to a variation in resin coating is less likely to occur in the case of using the resin coating, and the carrier adhesion due to charge injection is less likely to occur. $Rz\sigma$ is more preferably 0.3 $\mu$m or more. In addition, $Rz\sigma$ is more preferably 0.8 $\mu$m or less.

In a preferred embodiment, $Rz\sigma$ is more preferably 0.2 $\mu$m or more and 0.8 $\mu$m or less.

In a preferred embodiment, $Rz\sigma$ is more preferably 0.3 $\mu$m or more and 1.0 $\mu$m or less, and still more preferably 0.3 $\mu$m or more and 0.8 $\mu$m or less.

The ferrite particles according to the present invention more preferably have a surface roughness Rz of 2.5 $\mu$m or more and 4.5 $\mu$m or less and a standard deviation $Rz\sigma$ of the surface roughness Rz of 0.2 $\mu$m or more and 1.0 $\mu$m or less.

(5) Magnetization

In the ferrite particles according to the present invention, a residual magnetization $\sigma$r is preferably less than 3.0 Am$^2$/kg. When $\sigma$r is less than 3.0 Am$^2$/kg, aggregation due to the residual magnetization is less likely to occur, and a decrease in charge imparting ability to the toner and the variation in charge amount distribution are less likely to occur. $\sigma$r is more preferably 2.5 Am$^2$/kg or less. In addition, $\sigma$r is generally 0.5 Am$^2$/kg or more.

(6) Production Method

A method for producing the ferrite particles according to the present invention is not particularly limited, and the ferrite particles are preferably produced by using the following method.

First, appropriate amounts of raw materials for producing the ferrite particles according to the present invention are weighed, and then pulverized and mixed with a ball mill, a vibration mill, or the like for 0.5 hours or longer (preferably 1 hour to 20 hours) to obtain a pulverized product. The raw materials are not particularly limited, and are preferably selected so as to have a composition containing the above elements. Note that, as the raw material of Fe, it is preferable to use Fe$_2$O$_3$. As the raw material of Mn, it is preferable to use one or two or more compounds selected from Mn$_3$O$_4$ and MnO$_2$. As

the raw material of Mg, it is preferable to use one or two or more compounds selected from $Mg(OH)_2$, MgO, and $MgCO_3$. As the raw material of Sr, it is preferable to use $SrCO_3$. As the raw material of Ca, it is preferable to use $CaCO_3$.

In the ferrite particles according to the present invention, it is necessary to have a gradient of the composition (in particular, the ratio of Sr or Ca) according to the particle diameter, and the gradient can be adjusted by using a method of mixing and sintering granulated products having different compositions and particle diameters. Specifically, there is a method in which two types of blended raw materials having a desired composition ratio are prepared, two types of granulated products having different particle diameters are prepared by adjusting the particle diameter of the granulated products by changing granulation conditions (for example, a rotation speed of an atomizer) in a granulation stage, and the two types of granulated products are mixed and sintered such that D50 of the sintered product has a desired particle diameter.

The gradient of the composition according to the particle diameter can also be adjusted by a method of changing the particle diameter of the raw material of Sr or Ca to be used. Specific examples thereof include a method of preparing raw materials having different particle diameters and a method of pulverizing only the raw material of Sr or Ca using a bead mill or the like. As the particle diameter of the raw material is smaller, a solid phase reaction is more likely to occur and precipitation is more likely to occur on the surface of the particle. Therefore, for example, in the granulation stage, the raw material of the metal as a main component such as Fe, Mn, or Mg is pulverized to a desired particle diameter, and then the raw material of Sr or Ca is added and mixed thereto, whereby a slurry in which only the particle diameter of Sr or Ca in the raw materials is different can be produced.

Note that, although Sr or Ca can be easily precipitated on the surface of the particle by increasing a sintering temperature, it is difficult to form a gradient in the particle size distribution. In addition, in a method of mixing sintered products having different sintering temperatures, two types of particles having different surface properties or shapes are mixed, and as a result, the charge amount distribution may not be sharp.

The pulverized product thus obtained is pelletized using a pressure molding machine or the like, and then calcined at a temperature of 700°C to 1,100°C in the atmosphere. Without using a pressure molding machine, water may be added to the pulverized product to form a slurry, and the slurry may be granulated by using a spray dryer. After the calcination, the calcined product is further pulverized by using a ball mill, a vibration mill, or the like, and then water and, if necessary, a dispersant, a binder, or the like are added to adjust a viscosity, and the mixture is granulated by using a spray dryer. When the pulverization is performed after the calcination, water may be added and the pulverization may be performed with a wet ball mill, a wet vibration mill, or the like.

A pulverizer such as a ball mill or a vibration mill is not particularly limited, and in order to effectively and uniformly disperse the raw materials, fine beads having a particle diameter of 1 mm or less are preferably used as media to be used. A degree of pulverization can be controlled by adjusting a diameter of beads to be used, a composition, and a pulverization time. In order to uniformly disperse the raw materials, the pulverization is preferably performed such that a volume average particle diameter (D50) of the pulverized product is 5 µm or less, more preferably 3.0 µm or less, and still more preferably 2.5 µm or less.

Next, in order to obtain a ferrite powder having a uniform particle size, it is preferable to classify the granulated product before sintering to remove fine particles contained in the granulated product. The classification of the granulated product can be performed by using known airflow classification, a sieve, or the like.

Next, the classified granulated product is sintered. The granulated product is preferably subjected to preliminary sintering in a sintering furnace such as a rotary kiln in which the granulated product (sintered product) flows and passes through a hot section, and then subjected to sintering. By performing the preliminary sintering in a sintering furnace such as a rotary kiln in which the granulated product flows and passes through a hot section, it is possible to uniformly remove an organic substance such as a binder used during the granulation from the granulated product in a relatively short time as compared with the case where the preliminary sintering is performed in a state where the granulated product is left to stand in a sagger or the like. At the same time, a part of a ferrite reaction can be advanced during the preliminary sintering, and a variation in surface Rz during the subsequent sintering can be prevented.

In the case where the preliminary sintering is performed by using the above sintering furnace, the temperature is preferably, for example, 750°C or higher and 1,050°C or lower. By performing the preliminary sintering in this temperature range, it is easier to prevent abnormal grain growth and to prevent the variation in surface roughness Rz as described above while efficiently performing the removal of the organic substance and the ferrite reaction. Further, in order to efficiently perform the removal of the organic substance and the ferrite reaction, the preliminary sintering temperature is more preferably 800°C or higher, and still more preferably 850°C or higher. In addition, in order to prevent the abnormal grain growth, the preliminary sintering temperature is more preferably 1,000°C or lower, and still more preferably 980°C or lower.

In a preferred embodiment, the preliminary sintering temperature is more preferably 750°C or higher and 1,000°C or lower, and still more preferably 750°C or higher and 980°C or lower.

In a preferred embodiment, the preliminary sintering temperature is more preferably 800°C or higher and 1,050°C or lower, more preferably 800°C or higher and 1,000°C or lower, and still more preferably 800°C or higher and 980°C or lower.

In a preferred embodiment, the preliminary sintering temperature is more preferably 850°C or higher and 1,050°C or lower, more preferably 850°C or higher and 1,000°C or lower, and still more preferably 850°C or higher and 980°C or lower.

The sintering is preferably performed by holding at a temperature of 1,050°C or higher and 1,300°C or lower for 3 hours or longer and 24 hours or shorter, more preferably performed by holding at a temperature of 1,050°C or higher and 1,300°C or lower for 4 hours or longer and 24 hours or shorter, and still more preferably performed at 1,100°C or higher and 1,250°C or lower, in an inert atmosphere or a weakly oxidizing atmosphere. Note that, the inert atmosphere or the weakly oxidizing atmosphere means that an oxygen concentration is 0.1 vol% (1,000 ppm) or more and 5 vol% (50,000 ppm) or less in a mixed gas atmosphere of nitrogen and oxygen, and the atmospheric oxygen concentration is more preferably 0.1 vol% (1,000 ppm) or more and 3.5 vol% (35,000 ppm) or less, and still more preferably 0.1 vol% (1,000 ppm) or more and 2.5 vol% (25,000 ppm) or less. By performing the sintering in this temperature range and this oxygen concentration range, the ferritization reaction is advanced, and a desired saturation magnetization and residual magnetization can be obtained.

Thereafter, the sintered product is crushed and classified to obtain ferrite particles. As a classification method, the particle size is adjusted to a desired particle diameter by using existing air classification, mesh filtration method, precipitation method, or the like. In the case where of performing dry recovery, the recovery can be performed by using a cyclone or the like. In the case where of adjusting the particle size, two or more types of the above classification methods may be selected and performed, and coarse particles and fine particles may be removed by changing the conditions in one classification method. Thereafter, if necessary, the surface of the ferrite particles can be subjected to a surface oxidation treatment by heating at a low temperature, for example, a heat treatment at 300°C to 700°C, to adjust a surface resistance of the ferrite particles.

The present invention also relates to a carrier core material for an electrophotographic developer containing the above ferrite particles.

2. Carrier for Electrophotographic Developer

Next, the carrier for an electrophotographic developer according to the present invention will be described. The carrier for an electrophotographic developer according to the present invention contains the above ferrite particles and a resin coating layer provided on a surface of the ferrite particles. That is, the above ferrite particles are used as a core material of the carrier for an electrophotographic developer. Since the ferrite particles are as described above, the resin coating layer will be mainly described here.

(1) Coating Resin

The type of the resin (coating resin) constituting the resin coating layer is not particularly limited. For example, a fluorine resin, an acrylic resin, an epoxy resin, a polyamide resin, a polyamide-imide resin, a polyester resin, an unsaturated polyester resin, a urea resin, a melamine resin, an alkyd resin, a phenol resin, a fluorine acrylic resin, an acryl-styrene resin, or a silicone resin can be used. In addition, a modified silicone resin obtained by modifying a silicone resin or the like with a resin such as an acrylic resin, a polyester resin, an epoxy resin, a polyamide resin, a polyamide-imide resin, an alkyd resin, a urethane resin, or a fluorine resin may be used.

For example, the coating resin is preferably a thermosetting resin from the viewpoint of preventing resin peeling off due to a mechanical stress received during stirring and mixing with a toner. Examples of the thermosetting resin suitable for the coating resin include an epoxy resin, a phenol resin, a silicone resin, an unsaturated polyester resin, a urea resin, a melamine resin, an alkyd resin, and a resin containing these resins. However, as described above, the type of the coating resin is not particularly limited, and an appropriate coating resin can be appropriately selected according to the type of the toner to be combined, the use environment, and the like.

In addition, the resin coating layer may be formed by using one type of resin, or the resin coating layer may be formed by using two or more types of resins. In the case where two or more types of resins are used, two or more types of resins may be mixed to form one resin coating layer, or to form a plurality of resin coating layers. For example, it is also preferable that a first resin coating layer having good adhesion to the ferrite particles is provided on the surface of the ferrite particles, and a second resin coating layer for imparting a desired charge imparting property to the carrier is provided on a surface of the first resin coating layer.

(2) Resin Coating Amount

An amount of the resin for coating the surface of the ferrite particle (resin film amount) is preferably 0.1 wt% or more and 10 wt% or less with respect to the ferrite particle to be used as the carrier core material for an electrophotographic developer. When the resin coating amount is 0.1 wt% or more, the surface of the ferrite particle can be sufficiently coated with the resin, and a desired charge imparting ability can be obtained. In addition, when the resin coating amount is 10 wt% or less, aggregation of the carrier particles is less likely to occur during the production, and thus it is possible to prevent a decrease in productivity such as a decrease in yield, and to prevent a fluctuation in developer properties such as fluidity of the developer in an actual machine or the charge imparting property to the toner.

(3) Additive

The resin coating layer may contain an additive such as a conductive agent and a charge control agent for the purpose of controlling electrical resistance of the carrier, the charge amount, and a charge speed.

Examples of the conductive agent include conductive carbon, oxides such as titanium oxide and tin oxide, or various organic conductive agents. However, since the electrical resistance of the conductive agent is low, electric charge leakage is likely to occur when an addition amount of the conductive agent is extremely large. Therefore, a content of the conductive agent is preferably 0.25 wt% or more and 20.0 wt% or less, more preferably 0.5 wt% or more and 15.0 wt% or less, and still more preferably 1.0 wt% or more and 10.0 wt% or less, with respect to a solid content of the coating resin.

Examples of the charge control agent include various charge control agents generally used for a toner, and a silane coupling agent. The type of the charge control agent or the coupling agent is not particularly limited, and a charge control agent such as a nigrosine dye, a quaternary ammonium salt, an organic metal complex, or a metal-containing monoazo dye, an aminosilane coupling agent, a fluorine-based silane coupling agent, or the like can be preferably used. A content of the charge control agent is preferably 0.25 wt% or more and 20.0 wt% or less, more preferably 0.5 wt% or more and 15.0 wt% or less, and still more preferably 1.0 wt% or more and 10.0 wt% or less, with respect to the solid content of the coating resin.

3. Electrophotographic Developer

Next, an embodiment of the electrophotographic developer according to the present invention will be described. The electrophotographic developer includes the above carrier for an electrophotographic developer and a toner.

The electrophotographic developer is also preferably used as a replenishment developer.

(1) Toner

As the toner constituting the electrophotographic developer, for example, a polymerized toner produced by a polymerization method or a pulverized toner produced by a pulverization method can be preferably used. The toner may contain various additives, and may be any toner as long as it can be used in combination with the carrier to form an electrophotographic developer.

The toner has a volume average particle diameter (cumulative 50% particle diameter D50) of preferably 2 $\mu$m or more and 15$\mu$m or less, and more preferably 3 $\mu$m or more and 10 $\mu$m or less. When the volume average particle diameter (cumulative 50% particle diameter D50) of the toner is within the above range, an electrophotographic developer enabling high quality electrophotographic printing can be obtained.

As a mixing ratio of the carrier and the toner, a toner concentration is preferably 3 wt% or more and 15 wt% or less. With the electrophotographic developer containing the toner at the above concentration, a desired image density is likely to be obtained, and fogging and the toner scattering can be more favorably prevented. On the other hand, in the case where the electrophotographic developer is used as a replenishment developer, the amount of the toner is preferably 2 parts by weight or more and 50 parts by weight or less with respect to 1 part by weight of the carrier.

(2) Application to Electrophotographic Device

The electrophotographic developer according to the present invention can be suitably used in various electrophotographic developing devices to which a magnetic brush developing method is applied, in which a carrier is attracted and adheres to a magnetic drum or the like by a magnetic force to form a brush shape, and the toner is conveyed and adheres to an electrostatic latent image formed on a photoreceptor or the like while applying a bias electric field, thereby forming a visible image. The electrophotographic developer according to the present invention can be used, in applying a bias electric field, not only in an electrophotographic developing device using a DC bias electric field but also in an electrophotographic developing device using an AC bias electric field in which an AC bias electric field is superimposed on a DC bias electric field.

EXAMPLES

<Example 1>

A MnO raw material, a MgO raw material, and a $Fe_2O_3$ raw material as main component raw materials were weighed so as to have a molar ratio of 39.0:10.0:51.0 in terms of MnO:MgO:$Fe_2O_3$. In addition, a SrO raw material was weighed such that the molar ratio of the main component raw material to SrO was 100:0.8. Note that, trimanganese tetroxide was used as the Mn raw material, magnesium oxide was used as the MgO raw material, ferric oxide was used as the $Fe_2O_3$ raw material, and strontium carbonate was used as the SrO raw material.

Next, the weighed raw materials were pulverized for 5 hours by using a dry media mill (vibration mill, stainless steel beads having a diameter of 1/8 inch), and the obtained pulverized product was formed into pellets having a size of about 1 mm cube by using a roller compactor. The obtained pellets were passed through a vibration sieve having an opening of 3 mm to remove a coarse powder, and then passed through a vibration sieve having an opening of 0.5 mm to remove a fine powder. Thereafter, the obtained pellets were charged into a continuous electric furnace and heated at 900°C for 3 hours to undergo calcination. Next, the calcined product was pulverized for 6 hours by using a dry media mill (vibration mill, stainless steel beads having a 1/8 inch diameter) until the average particle diameter (D50) was about 5 μm.

Water was added to the obtained pulverized product, and the mixture was pulverized for 6 hours by using a wet media mill (horizontal bead mill, zirconia beads having a diameter of 1 mm). The particle diameter (primary particle diameter after the pulverization) of the obtained slurry was measured by using a laser diffraction particle size distribution measuring device (LA-950, manufactured by Horiba, Ltd.), and the average particle diameter (D50) was about 2.3 μm. Further, an appropriate amount of a dispersant was added to the obtained slurry, and as a binder, a PVA (polyvinyl alcohol) was added in an amount of 0.5 wt% with respect to the solid content (amount of the calcined product in the slurry), followed by granulation and drying by using a spray dryer. By adjusting the particle size of the obtained granulated product, a granulated product A having an average particle diameter (D50) of about 42 μm was obtained.

In addition, a granulated product B having an average particle diameter (D50) of about 55 μm was obtained by the same method as that of the granulated product A except that the SrO raw material was weighed such that the molar ratio of the main component raw material to SrO was 100:1.2. Note that, as the particle diameter of the granulated product, the particle size was adjusted by adjusting the rotation speed of the atomizer during the granulation using a spray dryer.

Then, a granulated product obtained by mixing the granulated product A and the granulated product B obtained above at a ratio of 2:1 was heated in an air atmosphere at 950°C for 2 hours using a rotary electric furnace to undergo preliminary sintering. Thereafter, the granulated product was held, for 3 hours, in a tunnel-type electric furnace at a sintering temperature (holding temperature) of 1,200°C in an atmosphere having an oxygen concentration of 0.3 vol%, to undergo sintering. At this time, a heating rate was 200°C/hr, and a cooling rate was 150°C/hr. The obtained sintered product was crushed by using a hammer crusher, and further classified by a gyro shifter (vibration sieve machine) and a turbo classifier (airflow classifier) to adjust the particle size, and low-magnetic components were separated by magnetic separation to obtain ferrite particles.

<Examples 2 to 9 and Comparative Examples 1 to 3>

Each ferrite particle was obtained in the same manner as in Example 1 except that the blending amounts of the raw materials used in the production of the granulated product A and the granulated product B and the average particle diameters (D50) of the granulated product A and the granulated product B were changed as shown in Table 1. Note that, in Example 8, calcium carbonate was used as a CaO raw material instead of the SrO raw material.

[Table 1]

| | | | Example | | | | | | | | | Comparative Example | | |
|---|---|---|---|---|---|---|---|---|---|---|---|---|---|---|
| | | | 1 | 2 | 3 | 4 | 5 | 6 | 7 | 8 | 9 | 1 | 2 | 3 |
| Granulated product A | Blending molar ratio | $Fe_2O_3$ | 51.0 | 51.0 | 51.0 | 51.0 | 51.0 | 51.0 | 51.0 | 51.0 | 51.0 | 51.0 | 51.0 | 51.0 |
| | | MnO | 39.0 | 39.0 | 39.0 | 39.0 | 39.0 | 39.0 | 39.0 | 39.0 | 39.0 | 39.0 | 39.0 | 39.0 |
| | | MgO | 10.0 | 10.0 | 10.0 | 10.0 | 10.0 | 10.0 | 10.0 | 10.0 | 10.0 | 10.0 | 10.0 | 10.0 |
| | | SrO | 0.8 | 0.4 | 0.5 | 1.2 | 1.2 | 0.8 | 0.8 | | 0.8 | 0.8 | 0.3 | 0.8 |
| | | CaO | | | | | | | | 1.2 | | | | |
| | D50 [μm] | | 42.1 | 42.4 | 42.4 | 42.3 | 42.3 | 42.4 | 42.3 | 42.6 | 42.1 | 42.1 | 42.0 | 42.1 |

(continued)

| | | | Example | | | | | | | | | Comparative Example | | |
|---|---|---|---|---|---|---|---|---|---|---|---|---|---|---|
| | | | 1 | 2 | 3 | 4 | 5 | 6 | 7 | 8 | 9 | 1 | 2 | 3 |
| Granulated product B | Blending molar ratio | Fe$_2$O$_3$ | 51.0 | 51.0 | 51.0 | 51.0 | 51.0 | 51.0 | 51.0 | 51.0 | 51.0 | 51.0 | 51.0 | 51.0 |
| | | MnO | 39.0 | 39.0 | 39.0 | 39.0 | 39.0 | 39.0 | 39.0 | 39.0 | 39.0 | 39.0 | 39.0 | 39.0 |
| | | MgO | 10.0 | 10.0 | 10.0 | 10.0 | 10.0 | 10.0 | 10.0 | 10.0 | 10.0 | 10.0 | 10.0 | 10.0 |
| | | SrO | 1.2 | 0.5 | 0.8 | 1.4 | 2.3 | 1.1 | 1.3 | | 0.9 | 0.8 | 0.3 | 0.5 |
| | | CaO | | | | | | | | 1.6 | | | | |
| | D50 [μm] | | 55.3 | 55.0 | 55.2 | 54.8 | 55.1 | 55.0 | 55.1 | 55.3 | 54.7 | 55.2 | 55.3 | 55.0 |

The ferrite particles obtained in Examples 1 to 9 and Comparative Examples 1 to 3 were evaluated for the following points. The results are shown in Table 2.

<Elemental Analysis>

The content of the metal component in the ferrite particles was measured by chemical analysis (ICP). Specifically, first, 0.2 g of the ferrite particles was weighed, 60 ml of pure water, 20 ml of 1 N hydrochloric acid, and 20 ml of 1 N nitric acid were added thereto, and the mixture was heated to prepare an aqueous solution in which the ferrite particles were completely dissolved. The obtained aqueous solution was set in an ICP analyzer (ICPS-1000IV, manufactured by Shimadzu Corporation), and the contents of Fe, Mn, Mg, Sr, and Ca as metal components were measured.

<Particle Size Distribution>

The particle size distribution of the ferrite particle was measured by using a laser diffraction scattering method. Specifically, first, 10 g of the ferrite particles and 80 ml of water were charged into a 100 ml beaker, and a dispersant (sodium hexametaphosphate) was added in two or three drops. Next, dispersion was performed for 20 seconds using an ultrasonic homogenizer (UH-150 type, manufactured by SMT Co., Ltd.) set to an output level of 4, and then bubbles generated on a surface of the beaker were removed to prepare a measurement sample. Then, the particle size distribution of the ferrite particle in the measurement sample was measured using a MICROTRAC particle size analyzer (Model MT3300II, manufactured by Nikkiso Co., Ltd.) under the condition of a refractive index of 2.42, and the cumulative 50% particle diameter D50 (μm), the ratio $D_{-22}$ (vol%) of the particle having a particle diameter of 22 μm or less, and the ratio $D_{+62}$ (vol%) of the particle having a particle diameter of 62 μm or more in the volume-based particle size distribution were calculated. In addition, the ratio $P_{+40}$ (number%) of the particle having a particle diameter of 40 μm or more in the number-based particle size distribution was calculated.

<Magnetization>

The residual magnetization of the ferrite particles was measured by using a vibrating sample magnetic measuring device (VSM-C7-10A, manufactured by TOEI INDUSTRY CO., LTD.). Specifically, first, a cell having an inner diameter of 5 mm and a height of 2 mm was filled with the ferrite particles, and the cell was set in the measuring device. Then, a magnetic field was applied and swept until 1 K·1000/4π·A/m (= 1 kOe). Next, the applied magnetic field was reduced, and a hysteresis curve was created on a recording paper. The residual magnetization was measured based on the data of this curve.

<Surface Properties>

As evaluation of the surface properties of the ferrite particles, the surface roughness Rz (μm) and the standard deviation Rzσ (μm) of the surface roughness Rz were measured. Specifically, first, a three-dimensional shape of the surface of the ferrite particle as a measurement target (measurement target particle) was acquired using a hybrid laser microscope (mc2000, manufactured by Lasertec Corporation). Note that, as a pretreatment, a double-sided tape was attached onto a slide glass, and the ferrite particles were sprayed onto the adhesive surface to fix the ferrite particles onto the slide glass. In addition, a xenon lamp was used as the light source, the magnification of an objective lens was set to 100 times, the measurement target particle was selected, and the three-dimensional shape of the surface thereof was acquired by an automatic imaging function of software LMeye7 attached to the measuring device.

On the three-dimensional image of the measurement target particle obtained as described above, 21 line segments with 15.0 $\mu$m were drawn at an interval of 0.75 $\mu$m, and a measurement section curve on each line segment was extracted. Each of the obtained measurement section curves was corrected by a contour curve filter to extract a roughness curve. Then, $\lambda$s for separating a roughness component and a wavelength component shorter than the roughness component and $\lambda$c for separating a roughness component and a waviness component were used as cutoff values of the contour curve filter, and the surface roughness Rz ($\mu$m) was calculated based on the obtained roughness curve with the cutoff values $\lambda$s = 0.0025 mm and $\lambda$c = 0.0800 mm. In this manner, an average value of the surface roughness Rz ($\mu$m) obtained based on the 21 line segments was defined as Rz ($\mu$m) of each measurement target particle. In the same procedure, an average value of values of the surface roughness Rz of 30 measurement target particles was defined as the surface roughness Rz ($\mu$m) of each ferrite particle, and the standard deviation Rz$\sigma$ ($\mu$m) thereof was calculated.

<EDX>

The ratio (atomic%) of Sr or Ca on the surface of the particle was measured by using energy dispersive X-ray analysis (EDX analysis). Note that, in the EDX analysis, the content of the element at a depth of about several $\mu$m of the ferrite particle can be measured. Specifically, first, an image of the ferrite particle was captured using a scanning electron microscope (SEM, SU8020, manufactured by Hitachi High-Tech Corporation) under conditions of an acceleration voltage of 20 kV, a WD of 15 mm, and a magnification of 150 times. Subsequently, the obtained image was taken into an energy dispersive X-ray analyzer (EMax X-Max50, manufactured by Horiba, Ltd.), and the particle having a particle diameter of 35 $\mu$m or less without particle overlapping was selected by region selection. Note that, only a particle having a ratio of a minimum Feret diameter to a maximum Feret diameter of 1.0 or more and 1.2 or less was selected, and within this range, a particle in which two or more particles were aggregated was also selected. Then, mapping collection was performed for constituent elements such as Fe, Mn, Mg, Sr, and Ca, and the ratio (atomic%) of Sr or Ca was calculated based on the obtained X-ray spectrum peak. The average value of the ratios (atomic%) of Sr or Ca of the 100 particles measured in this manner was defined as the ratio X (atomic%) of Sr or Ca in the elemental mapping of the surface of the particle having a particle diameter of 35 $\mu$m or less. The same operation was performed for the particle having a particle diameter of 40 $\mu$m or more, and the ratio Y (atomic%) of Sr or Ca in elemental mapping of the surface of the particle having a particle diameter of 40 $\mu$m or more was calculated.

<Chargeability>

As evaluation of the chargeability of the ferrite particles (carrier core material), a charge amount $Q_{N/N}$ and a standard deviation $Q_{N/N\sigma}$ thereof under a normal temperature and normal humidity (N/N) environment were measured. Note that, as a charge amount measuring device, a device including a cylindrical aluminum tube (sleeve), a magnet roll disposed inside the sleeve, and a cylindrical electrode disposed to surround the outside of the sleeve was used. The sleeve has a diameter of 31 mm and a length of 76 mm. The magnet roll has a structure in which a total of eight poles of magnets (magnetic flux density: 0.1 T) are disposed such that the N poles and S poles are alternately disposed. The cylindrical sleeve and the cylindrical electrode are set such that a gap therebetween is 5.0 mm.

The charge amount and the charge amount distribution under a normal temperature and normal humidity (N/N) environment were measured as follows. First, the ferrite particles (carrier core material) and a commercially available negative toner (cyan toner for DocuPrintC3530 manufactured by Fuji Xerox Co., Ltd.) for use in a full-color printer were weighed such that the toner concentration was 7.5 wt% and a total weight was 50 g. The weighed ferrite particles and toner were exposed to a normal temperature and normal humidity environment at a temperature of 20°C and a relative humidity of 55% for 12 hours or longer. Thereafter, the ferrite particles and the toner were charged into a 50 ml glass bottle and stirred at a rotation speed of 120 rpm for 30 minutes to prepare a developer.

The obtained developer (0.5 g) was made uniformly adhere to the sleeve of the charge amount measuring device. Next, while the sleeve was fixed, the inner magnet roll was rotated at a rotation speed of 100 rpm, and in this state, a DC voltage of 2,000 V was applied between the outer electrode and the sleeve for 60 seconds. By the voltage application, the toner in the developer was transferred to the outer electrode. At this time, an electrometer (insulation resistance meter model 6517A, manufactured by KEITHLEY Corporation) was connected to the cylindrical electrode, and an electrical charge amount of the transferred toner was measured. After 60 seconds had elapsed, the applied voltage was turned off, the rotation of the magnet roll was stopped, the outer electrode was taken out, and the toner that had transferred to the electrode was recovered and the weight thereof was measured. Then, the charge amount $Q_{N/N}$ ($\mu$C/g) was calculated based on the measured electrical charge amount and weight of the toner.

In addition, the charge amount distribution of the developer obtained above was measured using a charge amount and particle diameter distribution measuring device (E-SPART Analyzer EST-G, manufactured by Hosokawa Micron Group). In the measurement, only the toner was separated from the developer by holding the developer in an electromagnet and blowing a nitrogen gas at an appropriate pressure, and the toner was introduced into a measurement unit of the measuring device. 3,000 toners were analyzed, and the standard deviation $Q_{N/N_\sigma}$ ($\mu$C/g) of the charge amount per particle diameter was calculated.

[Table 2]

| | | Example | | | | | | | | | Comparative Example | | |
|---|---|---|---|---|---|---|---|---|---|---|---|---|---|
| | | 1 | 2 | 3 | 4 | 5 | 6 | 7 | 8 | 9 | 1 | 2 | 3 |
| Elemental analysis | Fe [wt%] | 51.2 | 51.4 | 51.4 | 51.0 | 50.8 | 51.2 | 51.1 | 51.3 | 51.2 | 51.3 | 51.5 | 51.3 |
| | Mn [wt%] | 18.9 | 18.9 | 18.9 | 18.8 | 18.7 | 18.9 | 18.8 | 18.9 | 18.9 | 18.9 | 19.0 | 18.9 |
| | Mg [wt%] | 2.2 | 2.2 | 2.2 | 2.2 | 2.1 | 2.1 | 2.1 | 2.2 | 2.2 | 2.1 | 2.1 | 2.1 |
| | Sr [wt%] | 0.7 | 0.3 | 0.4 | 0.9 | 1.2 | 0.7 | 0.8 | | 0.6 | 0.6 | 0.2 | 0.5 |
| | Ca [wt%] | | | | | | | | 0.5 | | | | |
| Particle size distribution | D50 | 36.4 | 36.7 | 36.6 | 36.4 | 36.3 | 36.5 | 36.7 | 36.6 | 36.6 | 36.4 | 36.8 | 36.3 |
| | $D_{+62}$ [vol%] | 2.9 | 3.0 | 3.0 | 2.9 | 3.0 | 2.9 | 3.1 | 3.0 | 2.9 | 2.9 | 3.0 | 3.0 |
| | $D_{-22}$ [vol%] | 0.9 | 0.8 | 0.9 | 0.9 | 1.0 | 0.8 | 0.9 | 1.0 | 0.8 | 0.9 | 0.8 | 0.9 |
| | $P_{+40}$ [number%] | 13.4 | 13.7 | 13.5 | 13.5 | 13.7 | 13.5 | 14.1 | 13.6 | 13.6 | 13.8 | 13.8 | 13.7 |
| Magnetization | $\sigma$r [Am$^2$/kg] | 1.3 | 1.0 | 1.1 | 1.6 | 1.9 | 1.2 | 1.4 | 1.3 | 1.4 | 1.3 | 0.7 | 1.4 |
| Surface properties | Rz | 3.15 | 2.81 | 2.88 | 3.26 | 3.70 | 2.50 | 4.20 | 3.30 | 3.01 | 3.02 | 2.60 | 2.90 |
| | Rz$\sigma$ [$\mu$m] | 0.54 | 0.44 | 0.36 | 0.62 | 0.63 | 0.31 | 0.83 | 0.44 | 0.56 | 0.52 | 0.33 | 0.41 |
| EDX | X [atom%] | 0.54 | 0.30 | 0.31 | 0.80 | 0.79 | 0.43 | 0.65 | 0.53 | 0.55 | 0.55 | 0.20 | 0.57 |
| | Y [atom%] | 0.79 | 0.36 | 0.55 | 0.97 | 1.54 | 0.55 | 1.08 | 0.79 | 0.61 | 0.55 | 0.20 | 0.33 |
| | Y/X | 1.46 | 1.20 | 1.77 | 1.21 | 1.96 | 1.28 | 1.66 | 1.49 | 1.10 | 1.00 | 1.00 | 0.58 |
| Chargeability | $Q_{N/N}$ [$\mu$C/g] | 48.6 | 41.3 | 43.3 | 49.4 | 47.4 | 44.1 | 44.3 | 46.5 | 46.6 | 47.4 | 36.2 | 44.3 |
| | $Q_{N/N}\sigma$ [$\mu$C/g] | 1.6 | 1.9 | 2.1 | 2.0 | 2.3 | 1.7 | 2.0 | 1.7 | 2.4 | 2.9 | 2.6 | 3.1 |

From the above results, it can be seen that the ferrite particles obtained in Examples 1 to 9 have a high charge imparting ability and a sharp charge amount distribution.

INDUSTRIAL APPLICABILITY

According to the present invention, it is possible to provide a carrier core material for an electrophotographic developer, which has a high charge imparting ability and a sharp charge amount distribution, which is thus less likely to cause an image density failure and toner scattering, and from which a good image quality can be obtained even when used as a developer for a long period of time, a carrier for an electrophotographic developer obtained by coating a surface of the carrier core material for an electrophotographic developer with a resin, and ferrite particles to be an electrophotographic developer using the carrier for an electrophotographic developer.

The present invention has been described in detail with reference to specific embodiments, but it is apparent to those skilled in the art that various changes and modifications can be made without departing from the spirit and scope of the present invention.

Note that, the present application is based on a Japanese patent application (Japanese Patent Application No. 2023-052502) filed on March 29, 2023, and the contents thereof are incorporated herein by reference.

**Claims**

1.   Ferrite particles, which satisfy the following formula:

$$1.10 \leq Y/X,$$

where X (atom%) is a ratio of Sr or Ca on a surface of a particle having a particle diameter of 35 $\mu$m or less and Y (atom%) is a ratio of Sr or Ca on a surface of a particle having a particle diameter of 40 $\mu$m or more.

2. The ferrite particles according to claim 1, which satisfy the following formulas:

$$0.30 \leq X \leq 0.80,$$

$$0.36 \leq Y \leq 1.55,$$

and

$$1.20 \leq Y/X \leq 2.00.$$

3. The ferrite particles according to claim 1, which have

   a cumulative 50% particle diameter D50 of 30 $\mu$m or more and 50 $\mu$m or less in a volume-based particle size distribution, and
   a ratio $P_{+40}$ of a particle having a particle diameter of 40 $\mu$m or more of 5 number% or more and 40 number% or less in a number-based particle size distribution.

4. The ferrite particles according to claim 1, which have

   a surface roughness Rz of 2.5 $\mu$m or more and 4.5 $\mu$m or less, and
   a standard deviation Rz$\sigma$ of the surface roughness Rz of 0.2 $\mu$m or more and 1.0 $\mu$m or less.

5. The ferrite particles according to claim 1, comprising:
   0.3 wt% or more and 1.2 wt% or less of Sr or Ca.

6. The ferrite particles according to claim 5, comprising:

   15 wt% or more and 30 wt% or less of Mn; and
   45 wt% or more and 65 wt% or less of Fe.

7. The ferrite particles according to claim 1, which have
   a residual magnetization $\sigma$r of less than 3.0 Am$^2$/kg.

8. A carrier core material for an electrophotographic developer, comprising
   the ferrite particles according to any one of claims 1 to 7.

9. A carrier for an electrophotographic developer, comprising:

   the ferrite particles according to any one of claims 1 to 7; and
   a resin coating layer provided on a surface of the ferrite particles.

10. An electrophotographic developer, comprising:

    the carrier for an electrophotographic developer according to claim 9; and
    a toner.

11. The electrophotographic developer according to claim 10, which is for use as a replenishment developer.

## INTERNATIONAL SEARCH REPORT

| | International application No. |
|---|---|
| | **PCT/JP2024/012889** |

**A. CLASSIFICATION OF SUBJECT MATTER**

*C01G 49/00*(2006.01)i; *G03G 9/107*(2006.01)i; *G03G 9/113*(2006.01)i
FI: C01G49/00; G03G9/107 321; G03G9/113 351

According to International Patent Classification (IPC) or to both national classification and IPC

**B. FIELDS SEARCHED**

Minimum documentation searched (classification system followed by classification symbols)

C01G49/00; G03G9/107; G03G9/113

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-036390 A (POWDERTECH CO., LTD.) 08 March 2022 (2022-03-08)<br>entire text, all drawings | 1-11 |
| A | JP 2016-138014 A (POWDERTECH CO., LTD.) 04 August 2016 (2016-08-04)<br>entire text, all drawings | 1-11 |
| A | JP 2015-157727 A (DOWA ELECTRONICS MATERIALS CO., LTD.) 03 September 2015<br>(2015-09-03)<br>entire text, all drawings | 1-11 |
| A | JP 2015-151287 A (DOWA ELECTRONICS MATERIALS CO., LTD.) 24 August 2015<br>(2015-08-24)<br>entire text, all drawings | 1-11 |
| A | CN 110928152 A (POWDERTECH CO., LTD.) 27 March 2020 (2020-03-27)<br>entire text, all drawings | 1-11 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

### INTERNATIONAL SEARCH REPORT
**Information on patent family members**

International application No.

**PCT/JP2024/012889**

| Patent document cited in search report | | | Publication date (day/month/year) | Patent family member(s) | | | Publication date (day/month/year) |
|---|---|---|---|---|---|---|---|
| JP | 2022-036390 | A | 08 March 2022 | (Family: none) | | | |
| JP | 2016-138014 | A | 04 August 2016 | US | 2018/0011414 | A1 | |
| | | | | entire text, all drawings | | | |
| | | | | WO | 2016/121697 | A1 | |
| | | | | EP | 3252536 | A1 | |
| | | | | TW | 201631417 | A | |
| JP | 2015-157727 | A | 03 September 2015 | (Family: none) | | | |
| JP | 2015-151287 | A | 24 August 2015 | (Family: none) | | | |
| CN | 110928152 | A | 27 March 2020 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015151287 A
- JP 2004198663 A
- JP 2023052502 A